# EUROPÄISCHE PATENTSCHRIFT

(11) **EP 2 917 070 B1**
(45) Veröffentlichungstag und Bekanntmachung des Hinweises auf die Patenterteilung: **23.03.2016**
(21) Anmeldenummer: 13799199.8
(22) Anmeldetag: 06.11.2013
(51) Int. Cl.: B60P 3/40, B62D 13/00, B62D 13/02, B62D 53/06

(54) **SCHWERLAST-TRANSPORTFAHRZEUG ZUM TRANSPORT EINES LÄNGLICHEN OBJEKTS**
HEAVY-LOAD TRANSPORT VEHICLE FOR TRANSPORTING AN ELONGATED OBJECT
VÉHICULE DE TRANSPORT DE CHARGES LOURDES SERVANT AU TRANSPORT D'UN OBJET ALLONGÉ

(30) Priorität: 06.11.2012 DE 102012021613; 06.11.2012 DE 202012010545 U
(43) Veröffentlichungstag der Anmeldung: 16.09.2015
(73) Patentinhaber: Scheuerle Fahrzeugfabrik GmbH, 74629 Pfedelbach (DE)
(72) Erfinder: KERN, Florian, 74629 Pfedelbach (DE)
(74) Vertreter: Leitner, Waldemar
(86) Internationale Anmeldenummer: PCT/EP2013/003326
(87) Internationale Veröffentlichungsnummer: WO 2014/072042

(56) Entgegenhaltungen:
- CH-A5- 677 646
- DE-A1- 2 554 047
- DE-A1-102009 040 200
- DE-A1-102009 054 293
- US-A- 3 387 860
- US-A- 5 326 214

## Beschreibung

Die Erfindung betrifft ein Schwerlast-Transportfahrzeug zum Transport eines länglichen Objekts, mit einer Zugmaschine, einem mehrachsigen Nachläufer, sowie einem auf dem Nachläufer und auf der Zugmaschine abgestützten Träger für das längliche Objekt, wobei der Nachläufer und der Träger in Bezug zueinander um eine Hochachse des Transportfahrzeugs drehbar sind

Aus der EP 1 465 789 B1 ist ein Schwerlast-Transportfahrzeug zum Transport eines Rotorblatts einer Windkraftanlage bekannt, dessen mehrachsiger Nachläufer durch das Rotorblatt selbst mit der Zugmaschine verbunden ist. Dabei wirken allerdings Biege- und Verwindungskräfte aus der Fahrdynamik auf das Rotorblatt ein, was die Gefahr von unsichtbaren Rissen oder anderen Beschädigungen des Rotorblatts birgt.

Dieses Risiko kann bei Schwerlast-Transportfahrzeugen zum Transport eines Rotorblatts einer Windkraftanlage vermieden werden, bei denen die Zugmaschine mit dem Nachläufer durch einen langgestreckten auf der Zugmaschine und dem Nachläufer abgestützten Träger für das Rotorblatt verbunden ist, der eventuelle Biege- und Verwindungskräfte aus der Fahrdynamik aufnimmt, so dass sie nicht in das Rotorblatt eingeleitet werden. Zur Anpassung an Rotorblätter mit unterschiedlichen Längen sowie zur Verbesserung der Manövrierfähigkeit ist der Träger in der Regel als Teleskopträger ausgebildet.

Bei Schwerlast-Transportfahrzeugen dieser Art kann das Rotorblatt entweder ganz auf dem Träger festgezurrt oder eingespannt werden oder nur im Bereich seiner Wurzel oberhalb von der Zugmaschine. Im zuerst genannten Fall kann die Länge des Fahrzeugs während des Transports nicht verändert werden, so dass das Fahrzeug aufgrund des großen Abstands zwischen der Zugmaschine und dem Nachläufer insbesondere beim Durchfahren von Kurven nur eine geringe Wendigkeit und Manövrierfähigkeit besitzt. Von Vorteil ist hingegen, dass bewährte Komponenten verwendet werden können. Während des Transports, zum Beispiel vor dem Durchfahren enger Kurven kann der Teleskopträger eingefahren werden, um zur Verbesserung der Manövrierfähigkeit den Abstand zwischen der Zugmaschine und dem Nachläufer und damit den Wenderadius des Transportfahrzeugs zu verkleinern. Jedoch erfordert dieses Konzept viele Sonderkomponenten und ist daher komplex. Zudem kann es zu Beschädigungen des Rotorblatts kommen, da sich beim Ein- und Ausfahren des Teleskopträgers auch die Abstützung des Rotorblatts entlang desselben verschiebt.

Die DE 100 31 024 B4 und DE 2554047 beschreiben einen Kombinationstransportzug zum Transport von Lang- oder Kurzmaterial, der ein Zugfahrzeug und einen Anhänger umfasst, wobei eine elektrische Lenkeinrichtung vorgesehen ist, welcher den Anhänger in Abhängigkeit vom Lenkeinschlagswinkel des Zugfahrzeugs lenkt und eine Zusatzfunktion aufweist, mittels welcher der Anhänger unabhängig von dem Lenkwinkeleinschlag lenkbar ist. Im hinteren Bereich des Zugfahrzeugs ist ein Schemel vorgesehen, der mit Hilfe einer Gelenkeinrichtung in Form einer Sattelkupplung drehbar auf dem Zugfahrzeug gelagert ist. Der zwei starre Achsen aufweisende Anhänger ist mit zwei Schemeln versehen. Die Abnahme des Lenkeinschlagwinkels des Zugfahrzeugs erfolgt zwischen dem Schemel und dem Rahmen des Zugfahrzeugs und ein den Lenkeinschlagwinkel repräsentierendes elektronisches Signal wird über eine Verbindungsleitung an den Anhänger übertragen und einer am Anhänger angeordneten Rechnereinheit zugeführt. Diese Rechnereinheit ist derart programmiert, dass sie in Abhängigkeit von den konkreten Konfigurations- und/oder Fahrparametern des Kombinationstransportzugs einen Sollwinkel des Anhängers berechnet. Zwei am Anhänger vorgesehene hydraulische Lenkzylinder werden dann so vor der Rechnereinheit angesteuert, dass sich der Solllenkwinkel einstellt. Die Lenkzylinder greifen hierbei an einer Lenkhebeleinheit an, welche unterhalb eines Drehkranzes drehfest angeordnet ist. Der Drehkranz verbindet dabei einen die beiden Achsen des Anhängers tragenden Unterwagen sowie einen drehbar auf dem Unterwagen gelagerten Oberwagen.

Ausgehend hiervon liegt der Erfindung die Aufgabe zugrunde, ein Transportfahrzeug der eingangs genannten Art dahingehend zu verbessern, dass die Manövrierfähigkeit und Wendigkeit des Transportfahrzeugs verbessert werden.

Zur Lösung dieser Aufgabe wird erfindungsgemäß vorgeschlagen, dass der Träger über einen Schwanenhals auf der Zugmaschine abgestützt ist, dass der Nachläufer mindestens eine Starrachse und mindestens eine Lenkachse aufweist, und dass sich in einer Lenkbetriebsart während der Fahrt die Lenkachse des Nachläufers in Abhängigkeit von Drehbewegungen des Trägers um die Hochachse in Bezug zum Nachläufer lenken lässt.

Indem nun vorgesehen ist, dass der Nachläufer und der Träger in Bezug zueinander um eine Hochachse des Transportfahrzeugs drehbar sind, wird eine Drehschemellenkung ausgebildet. Diese umfasst gemäß einer vorteilhaften Weiterbildung der Erfindung vorteilhaft einen einzigen Drehkranz oder Schemeltisch, der zweckmäßig etwa in der Mitte des Nachläufers angeordnet ist, wobei er drehfest mit dem Träger verbunden ist und sich in Bezug zu dem als Drehschemel dienenden Nachläufer um die Hochachse drehen kann, die sich durch die Mitte des Drehkranzes oder Schemeltischs erstreckt.

Der Nachläufer weist eine oder mehrere Starrachsen sowie mindestens eine Lenkachse auf, wodurch in Verbindung mit der Drehschemellenkung die Manövrierfähigkeit und Wendigkeit des Nachläufers weiter verbessert werden kann. Die Lenkachse ist vorteilhaft die vorderste Achse oder die vorderen Achsen des Nachläufers, die zweckmäßig entweder in Abhängigkeit von der Ausrichtung der Zugmaschine und des Trägers in Bezug zum Nachläufer bzw. in Abhängigkeit von den Drehbewegungen des Trägers in Bezug zum Nachläufer um die Hochachse oder unabhängig davon aktiv gelenkt werden kann.

Zum Lenken des Transportfahrzeugs weist dieses vorteilhaft für Straßen- oder Autobahnfahrten eine erste Lenkbetriebsart auf, in der sich der Träger in Bezug zum Nachläufer frei um die durch die Mitte des Drehkranzes verlaufende Hochachse drehen kann. Diese Drehbewegungen werden erfasst oder mittels einer Lenkabnahme abgenommen, um die Lenkachse des Nachläufers in Abhängigkeit von diesen Drehbewegungen zu lenken. Dazu weist das Transportfahrzeug bzw. der Nachläufer gemäß einer vorteilhaften Weiterbildung der Erfindung zweckmäßig einen Hydraulik-Kreislauf mit mehreren Hydraulikzylindern auf, von denen mindestens einer direkt oder indirekt auf die mindestens eine Lenkachse des Nachläufers einwirkt und mindestens ein anderer Hydraulikzylinder Teil einer Lenkabnahme ist, welche die Drehbewegungen des Trägers in Bezug zum Nachläufer abnimmt, wobei durch den Hydraulik-Kreislauf Hydraulikfluid zwischen den Hydraulikzylindern ausgetauscht wird, um den auf die Lenkachse einwirkenden Hydraulikzylinder entsprechend der jeweiligen Drehbewegung des Trägers ein- oder auszufahren und dadurch die Räder der Lenkachse der Drehbewegung des Trägers nachzuführen. Diese erste Lenkbetriebsart sorgt in Verbindung mit den Starrachsen des Nachläufers für einen guten Geradeauslauf.

Zum Durchfahren enger Kurven weist das Transportfahrzeug bevorzugt eine zweite Lenkbetriebsart auf, in der während der Fahrt die Lenkachse des Nachläufers und ggf. auch die Drehung des Drehkranzes in Bezug zum Nachläufer aktiv und gesteuert verändert werden kann, indem zusätzliches Hydraulikfluid in den Hydraulikreislauf eingespeist wird. Dies gestattet es, die Räder der mindestens einen Lenkachse des Nachläufers um ein gewünschtes Maß einzuschlagen bzw. den Nachläufer um die durch die Mitte des Drehkranzes verlaufende Fahrzeughochachse in Bezug zum Träger zu drehen, ohne dass sich dabei die Ausrichtung des Trägers verändert.

Dadurch kann die Längsmittelachse des Nachläufers bei Bedarf gegenüber der Längsmittelachse des Trägers um ein gewünschtes Maß verschwenkt und auf diese Weise der Nachläufer durch Kurven mit nahezu beliebigen Kurvenradien gelenkt werden. Gleichzeitig kann das Rotorblatt auf dem Träger fixiert werden, so dass es während des Transports keinerlei Kräften aus der Fahrdynamik ausgesetzt ist.

Eine weitere bevorzugte Weiterbildung der Erfindung sieht vor, dass der Nachläufer in Richtung seiner Längsachse in Bezug zum Träger verschiebbar ist, wodurch die Gesamtlänge des Transportfahrzeugs bei Leerfahrten deutlich verkürzt und damit die Manövrierfähigkeit weiter verbessert werden kann.

Gemäß einer weiteren bevorzugten Weiterbildung der Erfindung ist der Träger darüber hinaus als Teleskopträger ausgebildet, der in Richtung seiner Längsachse teleskopierbar ist, wodurch seine Länge zum Beispiel zur Durchführung von Leerfahrten stark verkürzt werden kann.

gesehen, der mit Hilfe einer Gelenkeinrichtung in Form einer Sattelkupplung drehbar auf dem Zugfahrzeug gelagert ist. Der zwei starre Achsen aufweisende Anhänger ist mit zwei Schemeln versehen. Die Abnahme des Lenkeinschlagwinkels des Zugfahrzeugs erfolgt zwischen dem Schemel und dem Rahmen des Zugfahrzeugs und ein den Lenkeinschlagwinkel repräsentierendes elektronisches Signal wird über eine Verbindungsleitung an den Anhänger übertragen und einer am Anhanger angeordneten Rechnereinheit zugeführt. Diese Rechnereinheit ist derart programmiert, dass sie in Abhängigkeit von den konkreten Konfigurations- und/oder Fahrparametem des Kombinationstransportzugs einen Sollwinkel des Anhängers berechnet. Zwei am Anhänger vorgesehene hydraulische Lenkzylinder werden dann so vor der Rechnereinheit angesteuert, dass sich der Solllenkwinkel einstellt. Die Lenkzylinder greifen hierbei an einer Lenkhebeleinheit an, welche unterhalb eines Drehkranzes drehfest angeordnet ist. Der Drehkranz verbindet dabei einen die beiden Achsen des Anhängers tragenden Unterwagen sowie einen drehbar auf dem Unterwagen gelagerten Oberwagen.

Ausgehend hiervon liegt der Erfindung die Aufgabe zugrunde, ein Transportfahrzeug der eingangs genannten Art dahingehend zu verbessern, dass die Manövrierfähigkeit und Wendigkeit des Transportfahrzeugs verbessert werden.

Zur Lösung dieser Aufgabe wird ein Schwerlast-Transportfahrzeug zum Transport eines länglichen Objekts gemäß den Merkmalen des Anspruchs 1 vorgeschlagen.

Indem nun vorgesehen ist, dass der Nachläufer und der Träger in Bezug zueinander um eine Hochachse des Transportfahrzeugs drehbar sind, wird eine Drehschemellenkung ausgebildet. Diese umfasst gemäß einer vorteilhaften Weiterbildung der Erfindung vorteilhaft einen einzigen Drehkranz oder Schemeltisch, der zweckmäßig etwa in der Mitte des Nachläufers angeordnet ist, wobei er drehfest mit dem Träger verbunden ist und sich in Bezug zu dem als Drehschemel dienenden Nachläufer um die Hochachse drehen kann, die sich durch die Mitte des Drehkranzes oder Schemeltischs erstreckt.

Der Nachläufer weist eine oder mehrere Starrachsen sowie mindestens eine Lenkachse auf, wodurch in Verbindung mit der Drehschemellenkung die Manövrierfähigkeit und Wendigkeit des Nachläufers weiter verbessert werden kann. Die Lenkachse ist vorteilhaft die vorderste Achse oder die vorderen Achsen des Nachläufers, die zweckmäßig entweder in Abhängigkeit von der Ausrichtung der Zugmaschine und des Trägers in Bezug zum Nachläufer bzw. in Abhängigkeit von den Drehbewegungen des Trägers in Bezug zum Nachläufer um die Hochachse oder unabhängig davon aktiv gelenkt werden kann.

Zum Lenken des Transportfahrzeugs weist dieses vorteilhaft für Straßen- oder Autobahnfahrten eine erste Lenkbetriebsart auf, in der sich der Träger in Bezug zum Nachläufer frei um die durch die Mitte des Drehkranzes verlaufende Hochachse drehen kann. Diese Drehbewegungen werden erfasst oder mittels einer Lenkabnahme abgenommen, um die Lenkachse des Nachläufers in Abhängigkeit von diesen Drehbewegungen zu lenken. Dazu weist das Transportfahrzeug bzw. der Nachläufer zweckmäßig einen Hydraulik-Kreislauf mit mehreren Hydraulikzylindern auf, von denen mindestens einer direkt oder indirekt auf die mindestens eine Lenkachse des Nachläufers einwirkt und mindestens ein anderer Hydraulikzylinder Teil einer

Hydraulikreislauf eingespeist wird. Dies gestattet es, die Räder der mindestens einen Lerikachse des Nachläufers um ein gewünschtes Maß einzuschlagen bzw. den Nachläufer um die durch die Mitte des Drehkranzes verlaufende Fahrzeughochachse in Bezug zum Träger zu drehen, ohne dass sich dabei die Ausrichtung des Trägers verändert.

Dadurch kann die Längsmittelachse des Nachläufers bei Bedarf gegenüber der Längsmittelachse des Trägers um ein gewünschtes Maß verschwenkt und auf diese Welse der Nachläufer durch Kurven mit nahezu beliebigen Kurvenradien gelenkt werden. Gleichzeitig kann das Rotorblatt auf dem Träger fixiert werden, so dass es während des Transports keinerlei Kräften aus der Fahrdynamik ausgesetzt ist.

Eine weitere bevorzugte Weiterbildung der Erfindung sieht vor, dass der Nachläufer in Richtung seiner Längsachse in Bezug zum Träger verschiebbar ist, wodurch die Gesamtlänge des Transportfahrzeugs bei Leerfahrten deutlich verkürzt und damit die Manövrierfähigkeit weiter verbessert werden kann.

Gemäß einer weiteren bevorzugten Weiterbildung der Erfindung ist der Träger darüber hinaus als Teleskopträgerausgebildet, der in Richtung seiner Längsachse teleskopierbar ist, wodurch seine Länge zum Beispiel zur Durchführung von Leerfahrten stark verkürzt werden kann.

Um es zu ermöglichen, einen solchen Nachläufer in Richtung seiner Längsachse in Bezug zum Träger zu verschieben, umfasst der Träger mindestens zwei und vorteilhaft mindestens drei benachbarte teleskopierbare Elemente, von denen sich das jeweils vordere Element mindestens teilweise ins hohle Innere des jeweils benachbarten hinteren Elements einfahren lässt, und von denen das hinterste Element an seiner Außenseite mit einer Linearführung für den Nachläufer versehen ist, so dass dieser auch dann am Träger bzw. am hintersten Element des Trägers entlang bewegt werden kann, wenn die alle oder ein Teil der teleskopierbaren Elemente des Trägers ineinander geschoben sind.

Um den Nachläufer an einer gewünschten Stelle entlang des Trägers bzw. des hintersten Elements des Trägers fixieren zu können, sind zwischen dem Träger und dem Nachläufer vorteilhaft Brems- oder Feststell-Einrichtungen vorgesehen, die zweckmäßig im Bereich der Linearführung angeordnet sind. Das Verschieben des Nachläufers in Bezug zum Träger erfolgt bevorzugt mit Hilfe der Zugmaschine, indem die Brems- oder Feststell-Einrichtungen gelöst und die Räder des Nachläufers blockiert werden und indem dann die Zugmaschine mit dem Träger vorwärts oder rückwärts verfahren wird, um den Träger in Bezug zum stehenden Nachläufer nach vorne bzw. hinten zu verschieben. In entsprechender Weise können auch die Elemente des teleskopierbaren Trägers mit Hilfe der Zugmaschine ineinander geschoben oder auseinander gezogen werden, indem die Zugmaschine rückwärts oder vorwärts verfahren wird, nachdem eine Arretierung zwischen benachbarten Elementen gelöst und die Brems- oder Feststell-Einrichtungen zwischen dem Träger und dem Nachläufer sowie die Räder des Nachläufers blockiert worden sind, so dass der Nachläufer ein unbewegliches Widerlager bildet.

Eine weitere vorteilhafte Weiterbildung der Erfindung sieht vor, dass der Schwanenhals eine Vorrichtung zum Anheben oder Absenken des Trägers umfasst, so dass bei Bedarf das zum Schwanenhals benachbarte vordere Ende des Trägers angehoben oder abgesenkt werden kann. Durch das Anheben lässt sich die Bodenfreiheit des Trägers hinter der Zugmaschine vergrößern, wodurch sich der Träger vor allem beim Durchfahren von Kurven leichter über Hindernisse hinweg bewegen lässt, wie zum Beispiel eine Leitplanke, Markierungspfosten oder Absperrungen. Dadurch kann beim Durchfahren enger Kurven die Manövrierfähigkeit und Wendigkeit erheblich verbessert werden, weil sich der Träger entlang von einer Sehne der Kurve erstrecken kann.

Die Vorrichtung zum Anheben oder Absenken des Trägers ist bevorzugt so ausgebildet, dass durch das Anheben des Trägers bzw. des vorderes Endes des Trägers der Abstand zwischen der Zugmaschine und dem Nachläufer verkürzt wird. Dadurch wird eine weitere Verbesserung der Manövrierfähigkeit erreicht, da auf diese Weise der Wenderadius eines Transportfahrzeugs gemäß der ersten Erfindungsvariante selbst dann noch weiter verkleinert werden kann, wenn ein teleskopierbarer Träger bereits ganz eingefahren und/oder ein in Bezug zum Träger verschiebbarer Nachläufer entlang des Trägers bereits in seine vorderste Endstellung verfahren worden ist.

Die Vorrichtung zum Anheben und Absenken des Trägers bzw. des vorderen Endes des Trägers umfasst vorteilhaft einen in den Schwanenhals integrierten Parallellenker mit zwei parallelen Lenkerstangen, die durch Betätigung eines Hydraulikzylinders zwischen einer allgemein horizontalen oder von der Zugmaschine aus leicht nach unten und hinten geneigten Stellung unter Anheben des vorderen Endes des Trägers in eine allgemein vertikale oder von der Zugmaschine aus steil nach oben und hinten geneigte Stellung verschwenkt werden können.

Der oder die Parallellenker und der oder die Hydraulikzylinder der Vorrichtung zum Anheben und Absenken des vorderen Endes des Trägers sind zweckmäßig zwischen einem auf dem hinteren Teil der Zugmaschine aufliegenden und in Bezug zur Zugmaschine um eine Hochachse des Transportfahrzeugs drehbaren Auflageteil des Schwanenhalses sowie einem allgemein horizontal ausgerichteten Halsteil des Schwanenhalses angeordnet, der von hinten her über den hinteren Teil der Zugmaschine ragt.

Da sich beim Anheben und Absenken des vorderen Endes des Trägers die Neigung des Trägers entlang seiner gesamten Länge verändert, ist der Träger vorteilhaft in Bezug zum Nachläufer um eine senkrecht zur Längsachse des Trägers ausgerichtete, zum Untergrund parallele Achse schwenkbar, so dass eine Änderung der Neigung des Trägers nicht zu einer Einleitung von Kräften in den Nachläufer oder einer Veränderung der auf die Achsen den Nachläufers aufgebrachten Lasten führt. Die Schwenkachse des Trägers ist vorteilhaft zwischen dem Drehkranz und einer auf dem Drehkranz abgestützten Auflageplatte angeordnet, die als Auflage für den Träger dient und ggf. entlang des Trägers verschiebbar ist.

Im Folgenden wird die Erfindung anhand eines in der Zeichnung dargestellten Ausführungsbeispiels näher erläutert.
Fig. 1 zeigt eine perspektivische Ansicht eines unbeladenen erfindungsgemäßen Schwerlast-Transportfahrzeugs mit einer Zugmaschine und mit einem Nachläufer, der durch einen Teleskopträger mit Schwanenhals mit der Zugmaschine verbunden ist;
Fig. 2 zeigt eine Seitenansicht des unbeladenen Transportfahrzeugs;
Fig. 3 zeigt eine Oberseitenansicht des unbeladenen Transportfahrzeugs beim Durchfahren einer Kurve;
Fig. 4 zeigt eine vergrößerte Seitenansicht des Nachläufers und eines Teils des Teleskopträgers;
Fig. 5 zeigt eine vergrößerte perspektivische Ansicht des Nachläufers und eines Teils des Teleskopträgers bei Geradeausfahrt;
Fig. 6 zeigt eine andere perspektivische Ansicht des Nachläufers und eines Teils des Teleskopträgers beim Durchfahren einer Kurve;
Fig. 7 zeigt eine Oberseitenansicht des Nachläufers und eines Teils des Teleskopträgers beim Durchfahren einer Kurve;
Fig. 8 zeigt eine perspektivische Ansicht des Nachläufers;
Fig. 9 zeigt eine Oberseitenansicht des Nachläufers;
Fig. 10 zeigt eine Seitenansicht des Nachläufers;
Fig. 11 zeigt eine Rückseitenansicht des Nachläufers;
Fig. 12 zeigt eine Seitenansicht des Schwanenhalses in einer Stellung, in der das vordere Ende des Trägers im Wesentlichen dieselbe Bodenfreiheit wie die Zugmaschine besitzt;
Fig. 13 zeigt eine Seitenansicht des Schwanenhalses in einer Stellung, in der das vordere Ende des Trägers etwas abgesenkt ist;
Fig. 14 zeigt eine Seitenansicht des Schwanenhalses in einer Stellung, in der das vordere Ende des Trägers angehoben ist;
Fig. 15 zeigt eine Seitenansicht des mit einem Rotorblatt beladenen Transportfahrzeugs;
Fig. 16 zeigt eine Oberseitenansicht des beladenen Transportfahrzeugs beim Durchfahren einer Kurve mit größerem Radius;
Fig. 17 zeigt eine Seitenansicht des mit einem Rotorblatt beladenen Transportfahrzeugs, wobei der Abstand zwischen Zugmaschine und Nachläufer verkleinert ist;
Fig. 18 zeigt eine Oberseitenansicht des beladenen Transportfahrzeugs beim Durchfahren einer Kurve mit kleinerem Radius.

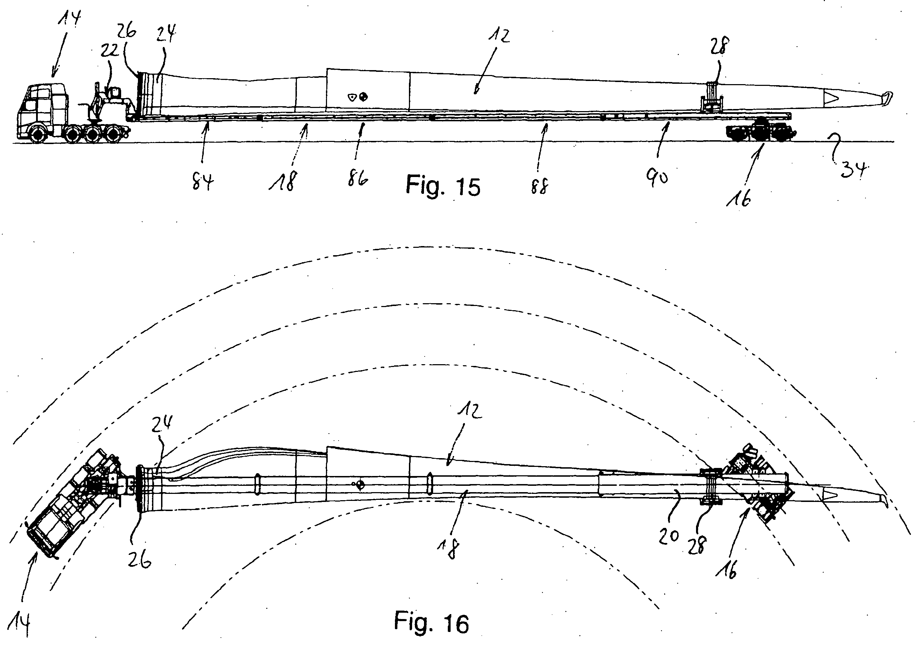

Das in der Zeichnung dargestellte Schwerlast-Transportfahrzeug 10 dient zum Transport eines Rotorblatts 12 für eine Windkraftanlage, wie in den Figuren 15 bis 18 dargestellt.

Das Transportfahrzeug 10 besteht im Wesentlichen aus einer Zugmaschine 14, einem im Abstand hinter der Zugmaschine 14 angeordneten dreiachsigen Nachläufer 16, sowie einem Teleskopträger 18, der eine Lastauflagefläche 20 für das Rotorblatt 12 aufweist und an seinem vorderen Ende durch einen Schwanenhals 22 mit der Zugmaschine 14 verbunden ist. Wie in den Figuren 15 bis 18 dargestellt, ist sich beim Transport eines Rotorblatts 12 dessen Wurzelteil 24 auf dem vorderen Ende des auseinander gezogenen Teleskopträgers 18 angeordnet, so dass ein wesentlicher Teil der Last des Rotorblatts 12 über den Schwanenhals 22 auf der Zugmaschine 14 abgestützt ist. Der Wurzelteil 24 ist an einer Halterung 26 festgeschraubt, die über die Lastauflagefläche 20 überstehend am vorderen Ende des Trägers 18 befestigt ist. Der hintere Teil des Rotorblatts 12 ist zur Sicherung durch eine weitere Halterung 28 mit dem Träger 18 verbunden. Durch die Halterungen 26, 28 wird das Rotorblatt 12 in Bezug zum Träger 18 unbeweglich fixiert.

Als Zugmaschine 14 wird eine übliche, für ein Schwerlast-Transportfahrzeug 10 geeignete Zugmaschine verwendet, auf deren flachem hinterem Teil 30 eine Kupplungseinrichtung 32 zum Ankuppeln des Schwanenhalses 22 vorgesehen ist, so dass dieser in Bezug zur Zugmaschine 14 um eine erste zum Untergrund 34 senkrechte Hochachse 36 des Transportfahrzeugs 10 drehbar ist.

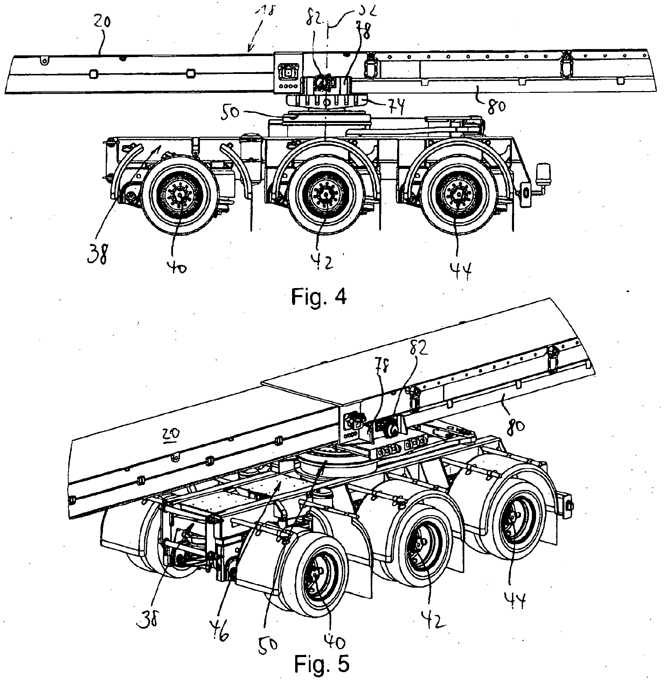

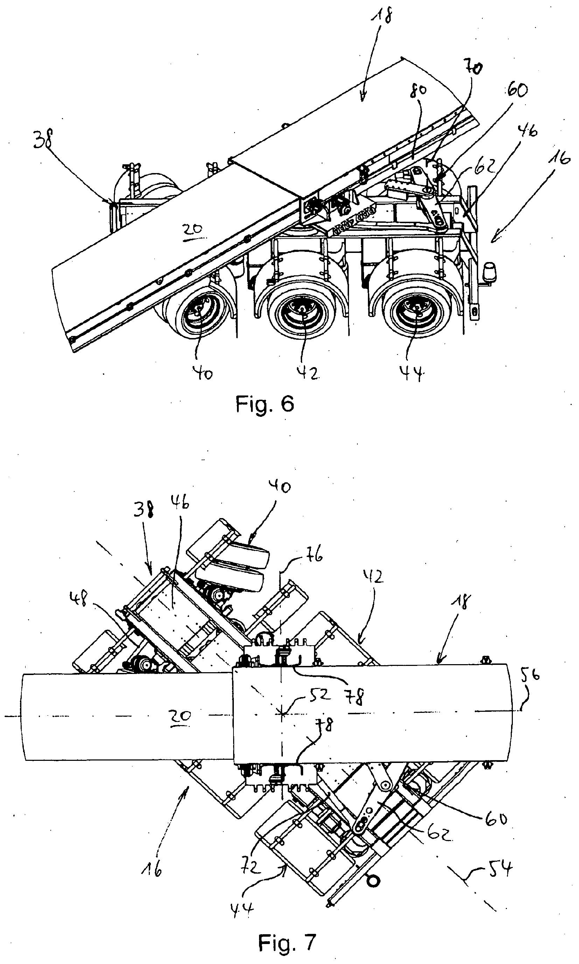

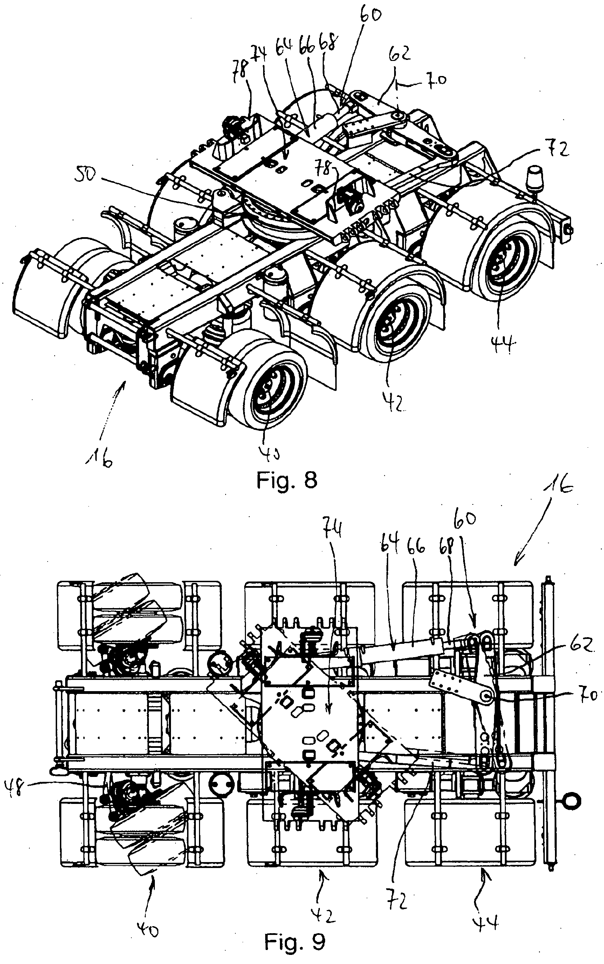

Wie am besten in den Figuren 4 bis 10 dargestellt, weist der Nachläufer 16 ein Fahrgestell 38 auf, an dem die Räder der drei Achsen 40, 42, 44 beiderseits eines Längsträgers 46 befestigt sind. Bei den beiden hinteren Achsen 42 und 44 handelt es sich um Starrachsen, deren Räder nicht lenkbar sind. Bei der vorderen Achse 40 handelt es sich um eine Lenkachse, deren Räder durch eine hydraulische Achsschenkellenkung mit zwei im Fahrgestell 38 des Nachläufers 16 verbauten Hydraulikzylindern (nicht sichtbar) lenkbar sind, welche die Radpaare der Lenkachse über Spurstangen 48 (Fig. 7 und 9) steuern.

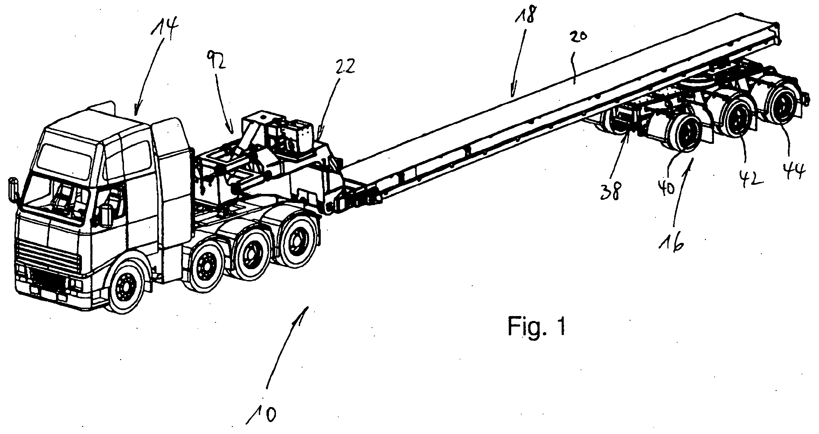

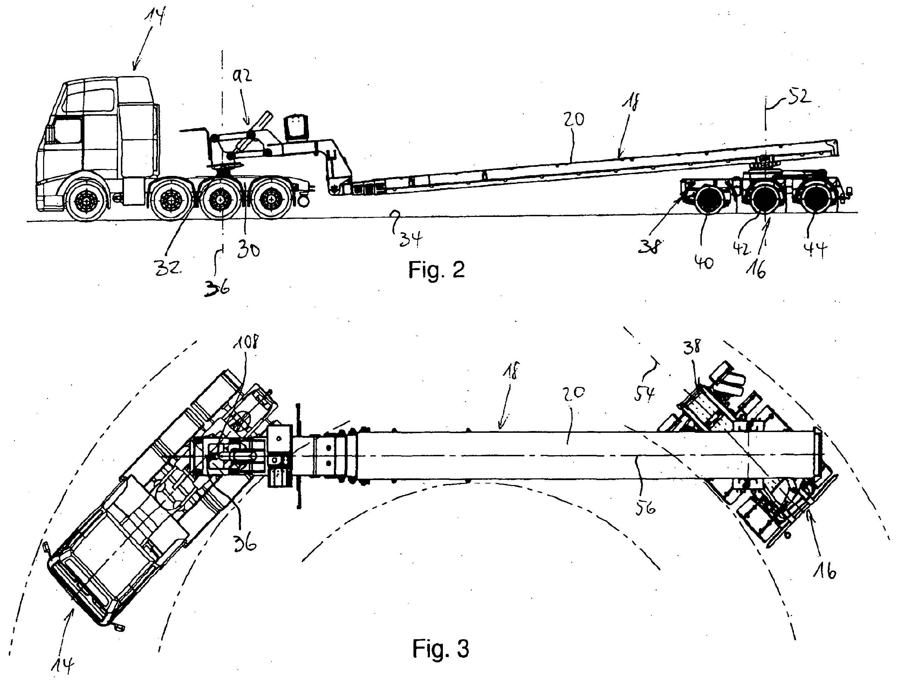

Oberhalb von der mittleren Achse 42 weist der Nachläufer 16 einen auf den Längsträger 46 aufgesetzten Drehkranz 50 auf, über den sich ein hinterer Endabschnitt des Teleskopträgers 18 mit einem Teil der Last auf dem Nachläufer 16 abstützt. Der Drehkranz 50 ist ein Teil einer Drehschemellenkung des Nachläufers 16 und wird daher im Rahmen dieser Patentanmeldung auch als Schemeltisch bezeichnet. Der Drehkranz 50 ist in Bezug zum Nachläufer 16 um eine zweite, zum Untergrund 34 senkrechte Hochachse 52 des Fahrzeugs 10 drehbar und ist drehfest mit dem hinteren Teil des Teleskopträgers 18 verbunden, so dass beim Lenken des Nachläufers 16 die Ausrichtung oder Winkellage von dessen Längsachse 54 in Bezug zur Längsachse 56 des Teleskopträgers 18 verändert werden kann. Während die Längsachsen 54, 56 bei Geradeausfahrt fluchten, wie in Fig. 1, 4 und 5 dargestellt, schließen die Längsachsen 54, 56 bei Kurvenfahrten in Draufsicht einen Winkel ein, wie in Fig. 3, 6 und 7 dargestellt.

Wie am besten in den Figuren 6 bis 8 dargestellt, umfasst die Drehschemellenkung des Nachläufers 16 eine Lenkabnahme 60 mit einem zweiarmigen Lenkhebel 62 und einem Hydraulikzylinder 64, dessen Zylinderrohr 66 am Drehkranz 50 angelenkt ist und dessen Kolbenstange 68 am Ende von einem Hebelarm des zweiarmigen Lenkhebels 62 angelenkt ist, der in Bezug zum Nachläufer 16 um eine dritte Hochachse 70 des Fahrzeugs 10 schwenkbar ist. Das Ende des anderen längeren Hebelarms des Lenkhebels 62 ist durch eine Koppelstange 72 mit dem Drehkranz 50 verbunden.

Der Hydraulikzylinder 64 der Lenkabnahme 60 und die beiden Hydraulikzylinder der Achsschenkellenkung der Lenkachse 40 sind Teil eines Hydraulikkreislaufs (nicht dargestellt) des Fahrzeugs 10, der es gestattet, den Nachläufer 16 in zwei verschiedenen Lenkbetriebsarten zu lenken.

In einer ersten, für Straßen- und Autobahnfahrt konzipierten Standard-Lenkbetriebsart nimmt die Lenkabnahme 60 während der Fahrt die von der Zugmaschine 14 und dem Teleskopträger 18 bei Kurvenfahrten verursachte Drehung des Drehkranzes 50 in Bezug zum Nachläufer 16 ab, um die Lenkachse 40 in Abhängigkeit von dieser Drehung zu steuern. In dieser Lenkbetriebsart wird Hydraulikfluid zwischen dem Hydraulikzylinder 64 der Lenkabnahme 60 und den mit dem Hydraulikzylinder 64 kommunizierenden Hydraulikzylindern der Lenkachse 40 ausgetauscht, indem Hydraulikfluid aus dem Hydraulikzylinder 64 in die Hydraulikzylinder der Lenkachse 40 verdrängt oder Hydraulikfluid aus den Hydraulikzylindern der Lenkachse 40 in den Hydraulikzylinder 64 gefördert wird, so dass die Räder der Lenkachse 40 entsprechend der Drehung des Teleskopträgers 18 in Bezug zum Nachläufer 16 eingeschlagen werden. Durch diese Lenkbetriebsart folgt der Nachläufer 16 dem Weg, den die Zugmaschine 14 vorgibt, während die beiden Starrachsen 42, 44 des Nachläufers 16 für einen guten Geradeauslauf sorgen.

In einer zweiten, vor allem zum Durchfahren von engen Kurven konzipierten Lenkbetriebsart wird der Nachläufer 16 von einem Bediener per Fernbedienung gelenkt. In dieser Lenkbetriebsart wird gezielt Hydraulikfluid in den Hydraulikkreislauf eingespeist, um die Hydraulikzylinder der Lenkachse 40 ein- oder auszufahren und dadurch die Räder der Lenkachse 40 in die gewünschte Richtung einzuschlagen.

Die vom Bediener manuell gesteuerte aktive Achsschenkellenkung der Lenkachse 40 kann bei Bedarf durch eine aktive Drehschemellenkung unterstützt werden, indem das in den Hydraulikkreislauf eingespeiste Hydraulikfluid auch dem am Drehkranz 50 angreifenden Hydraulikzylinder 62 der Lenkabnahme 60 zugeführt wird, um diesen ein- oder auszufahren und dadurch das Einschlagen der Räder der Lenkachse 40 in die gewünschte Richtung zu unterstützen.

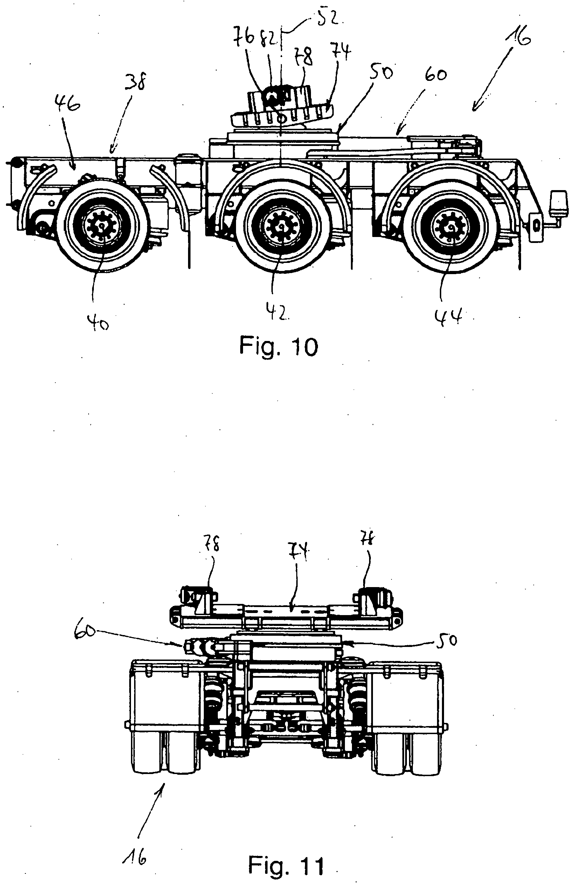

Oberhalb vom Drehkranz 50 befindet sich eine rechteckige Auflagerplatte 74, die sich auf dem Drehkranz 50 abstützt. Die Auflagerplatte 74 ist um die zweite Hochachse 52 drehfest mit dem Drehkranz 50 verbunden, ist jedoch in Bezug zum Drehkranz 50 um eine quer zur Längsachse 54 des Trägers 18 verlaufende Achse 76 schwenkbar, wie am besten in Fig. 10 dargestellt, so dass das vordere Ende des Trägers 18 abgesenkt oder angehoben werden kann, ohne dass sich die auf den Nachläufer 16 oder den Drehkranz 50 einwirkende Last verändert. Wie in den Fig. 7 und 10 dargestellt, verlaufen die Achsen 54, 56 und 76 in der Draufsicht durch die Achse 52.

Die Auflagerplatte 74 weist zwei nach oben überstehende, im Abstand voneinander beiderseits der zweiten Hochachse 52 angeordnete Führungselemente 78 auf, die es im Zusammenwirken mit zwei seitlichen Linearführungen 80 des Teleskopträgers 18 gestatten, den Teleskopträger 18 in Richtung seiner Längsachse 56 in Bezug zum Nachläufer 16 zu verschieben. Jedes der beiden Führungselemente 78 ist mit einer Brems- oder Feststell-Einrichtung 82 versehen, so dass sich der Teleskopträger 18 in beliebigen Verschiebestellungen in Bezug zum Nachläufer 16 lösbar arretieren lässt.

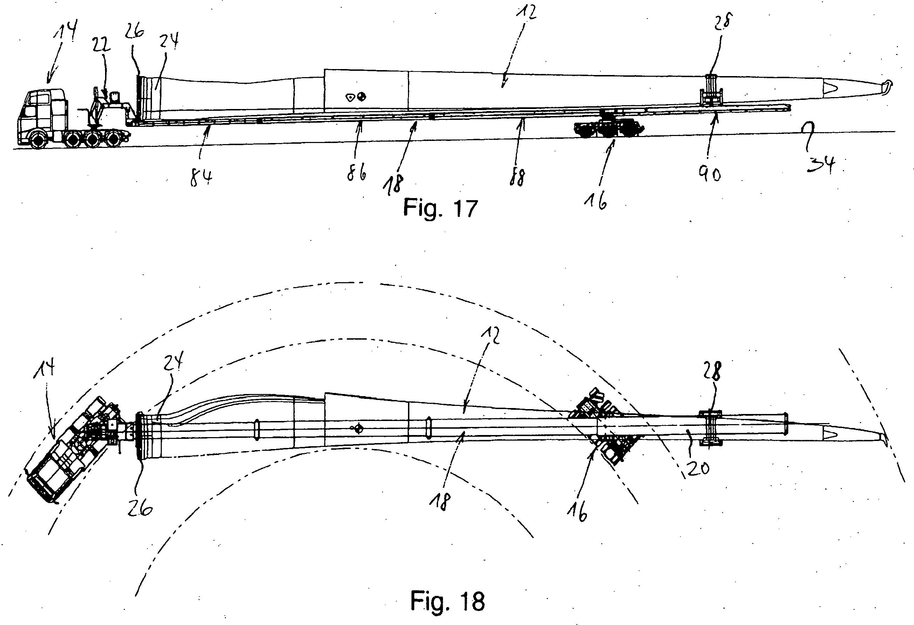

Wie am besten aus Fig. 15 und 17 ersichtlich ist, umfasst der Teleskopträger 18 vier hohle teleskopierbare Elemente 84, 86, 88, 90, deren Querschnittsabmessungen in Richtung der Zugmaschine 14 abnehmen. Dadurch können die Elemente 84, 86, 88, 90 bei Leerfahrten des Transportfahrzeugs 10 in Richtung der Längsachse 56 ineinander geschoben werden, wie in Fig. 1 dargestellt, bzw. können zum Transport eines Rotorblatts 12 in Richtung der Längsachse 56 auseinander gezogen werden, wie in Fig. 15 und 17 dargestellt. Die einzelnen Elemente 84, 86, 88, 90 können in unterschiedlichen Telekopierstellungen in Bezug zu jeweils benachbarten Element arretiert werden, um eine unerwünschte Verschiebung der Elemente 84, 86, 88, 90 in Bezug zueinander zu verhindern.

Zur Verlängerung bzw. zur Verkürzung des Teleskopträgers 18 wird zuerst die Arretierung zwischen den benachbarten Elementen 84, 86; 86, 88; 88, 90 gelöst, die ineinander geschoben oder auseinander gezogen werden sollen. Anschließend werden die Räder des Nachläufers 16 blockiert und die Zugmaschine 14 zur Verlängerung des Teleskopträgers 18 nach vorne bzw. zur Verkürzung des Teleskopträgers 18 nach hinten verfahren, bevor die Elemente 84, 86, 88, 90 in der gewünschten Teleskopstellung wieder arretiert werden.

Das hinterste Element 90 mit dem größten Querschnitt stützt sich über die Auflagerplatte 74 auf dem Nachläufer 16 ab und ist an seinen Längsseiten mit den Linearführungen 80 versehen, in welche die über die Auflagerplatte 74 überstehenden Führungselemente 78 eingreifen.

Wie in Fig. 15 und 17 dargestellt, sind der Teleskopträger 18 und der Nachläufer 16 in Bezug zueinander beweglich, wobei sich der Nachläufer 16 mit den Führungselementen 78 zwischen einer in Fig. 15 dargestellten hinteren Endstellung und einer in Fig. 17 dargestellten vorderen Endstellung am hintersten Element 90 des Teleskopträgers 18 entlang (Fig. 17) verschiebbar, entlang des hintersten Elements entlang bewegt. Dadurch lässt sich ohne eine Veränderung der Ausrichtung oder Winkellage der Längsachse 54 des Nachläufers 16 in Bezug zur Längsachse 56 des Trägers 18 und der Zugmaschine 14 der Radius einer vom Transportfahrzeug 10 durchfahrenen Kurve erheblich verkleinern oder vergrößern, wie durch Vergleich der Figuren 18 und 16 ersichtlich ist.

Mittels der Brems- oder Feststell-Einrichtungen 82 lassen sich die beiden Führungselemente 78 in beliebigen gewünschten Verschiebestellung von entgegengesetzten Seiten her gegen die Linearführungen 80 anpressen, um den Nachläufer 16 und den Träger 18 in Bezug zueinander zu arretieren. Entsprechend lassen sich die Führungselemente 78 quer zur Längsachse 56 etwas von den Linearführungen 80 weg bewegen, um eine Verschiebung des Nachläufers 16 und des Trägers 18 in Bezug zueinander zu ermöglichen.

Das Verschieben des Teleskopträgers 18 in Bezug zum Nachläufer 16 erfolgt mit Hilfe der Zugmaschine 14, indem die Brems- oder Feststell-Einrichtungen 82 gelöst und die Räder des Nachläufers 16 blockiert werden, bevor dann die Zugmaschine 14 zusammen mit dem Träger 18 vorwärts oder rückwärts verfahren wird, um den Träger 18 in Bezug zum feststehenden Nachläufer 16 in die gewünschte Richtung zu verschieben.

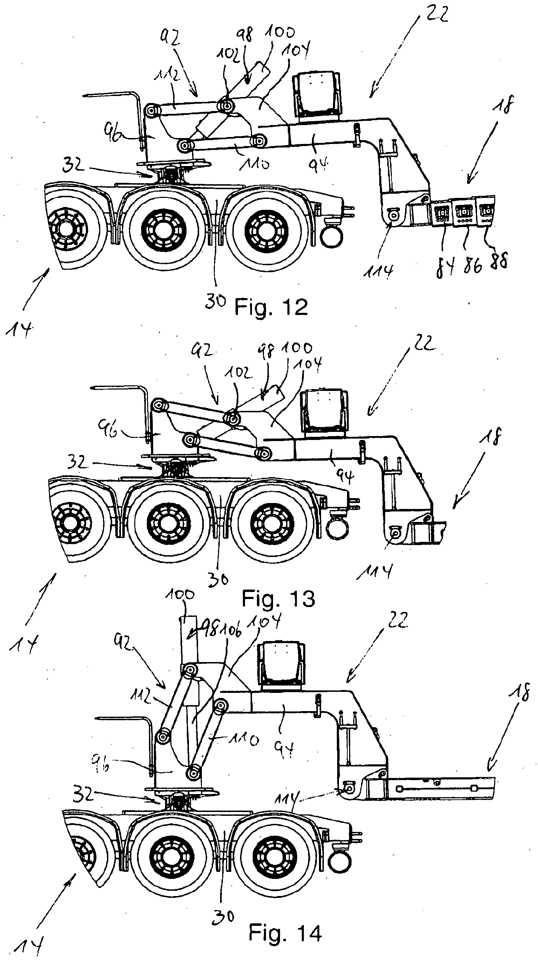

Wie am besten in den Figuren 12 bis 14 dargestellt, kann die Bodenfreiheit des vorderen Endes des Teleskopträgers 18 mit Hilfe einer in den Schwanenhals 22 integrierten Hub- und Absenk-Vorrichtung 92 verändert werden. Dadurch kann das vordere Ende des Teleskopträgers 18 aus einer in Fig. 1 und 12 dargestellten Normalstellung bei Leerfahrt angehoben oder abgesenkt werden, zum Beispiel um den Teleskopträger 18 beim Transport eines Rotorblatts 12 während des Durchfahrens einer Kurve über eine die Kurve an der Innenseite begrenzende Leitplanke oder ein anderes Hindernis hinweg zu bewegen bzw. um das vordere Ende des Teleskopträgers 18 beim Abkuppeln von der Zugmaschine 14 auf einer auf dem Untergrund 34 liegenden Holzunterlage (nicht dargestellt) abzusetzen.

Wie ebenfalls am besten in den Figuren 12 bis 14 dargestellt ist, ist die Vorrichtung 92 zwischen einem über den hinteren Teil 30 der Zugmaschine 14 ragenden allgemein horizontal ausgerichteten Halsteil 94 des Schwanenhalses 22 und einem auf der Kupplungseinrichtung 32 abgestützten Auflageteil 96 des Schwanenhalses 22 angeordnet, der in Bezug zur Zugmaschine 14 um die Hochachse 36 drehbar ist.

Die Vorrichtung 92 umfasst einen Hydraulikzylinder 98, dessen Zylinderrohr 100 etwa in seiner Mitte um eine zur Längsachse 56 des Trägers 18 senkrechte und zum Untergrund 34 parallele Schwenkachse 102 schwenkbar am freien Ende eines schräg nach oben über den Halsteil 94 überstehenden Widerlagervorsprungs 104 angelenkt ist, während seine Kolbenstange 106 in einem Schwenkgelenk 108 des Auflageteils 96 angelenkt ist.

Die Vorrichtung 92 umfasst weiter einen Parallellenker mit zwei parallelen Lenkerstangen 110 und 112 von gleicher Länge. Die vorderen Enden der beiden Lenkerstangen 110, 112 sind mit einem Höhenversatz sowie mit einem Längsversatz in Richtung der Längsachse 56 des Trägers 18 am Auflageteil 96 angelenkt, während ihre hinteren Enden mit einem entsprechenden Höhen- und Längsversatz am freien Ende des Halsteils 94 bzw. am freien Ende des Widerlagervorsprungs 104 angelenkt sind, wobei die Schwenkachse des hinteren Endes der oberen Lenkerstange 112 mit der Schwenkachse 102 des Zylinderrohrs 100 des Hydraulikzylinders 98 und die Schwenkachse des vorderen Endes der unteren Lenkerstange 110 mit der Schwenkachse des Schwenkgelenks 108 der Kolbenstange 106 des Hydraulikzylinders 98 fluchtet. Durch diese Anordnung erstreckt sich die Längsmittelachse des Hydraulikzylinders 98 diagonal durch ein von den Lenkerstangen 110, 112 begrenztes Parallelogramm. Es ist auch möglich, anstelle dieser Parallelogramm-Kinematik mit gleichen oder fast gleichen Lenkerstangen 110, 112 vorzusehen, dass eine der beiden Lenkerstangen 110 oder 112 leicht verkürzt wird. Dadurch wird erreicht, dass beim Anheben des von den Lenkerstangen 110, 112 definierten Parallelogramms die Kinematik der Kupplungseinrichtung 32 besser ausgenutzt werden kann.

Wenn der Hydraulikzylinder 98 ganz eingefahren ist, wie in Fig. 13 dargestellt, sind die beiden Lenkerstangen 110, 112 vom Auflageteil 96 aus unter einem flachen Neigungswinkel schräg nach hinten und unten geneigt. In diesem Fall befindet sich das vordere Ende des Teleskopträgers 18 in einer abgesenkten Endstellung, in der seine Bodenfreiheit am kleinsten ist.

Wenn der Hydraulikzylinder 98 ganz ausgefahren ist, wie in Fig. 14 dargestellt, sind die beiden Lenkerstangen 110, 112 vom Auflageteil aus unter einem steilen Neigungswinkel schräg nach hinten und oben geneigt. In diesem Fall befindet sich das vordere Ende des Teleskopträgers 18 in einer angehobenen Endstellung, in der seine Bodenfreiheit am größten ist.

Wenn der Hydraulikzylinder 98 so weit eingefahren ist, dass die beiden Lenkerstangen 110, 112 etwa parallel zum Halsteil 94 ausgerichtet sind, wie in Fig. 12 dargestellt, befindet sich der Schwanenhals 22 in einer Normalstellung, die er während einer Leerfahrt vorzugsweise einnimmt.

Wie man beim Vergleich der Figuren 12 bis 14 sieht, wird durch das Anheben des vorderes Endes des Trägers 18 nicht nur die Bodenfreiheit vergrößert, sondern auch der Abstand zwischen der Zugmaschine 14 und dem Nachläufer 16 etwas verkürzt. Auf diese Weise kann der kleinste Wenderadius des Transportfahrzeugs 10 selbst dann noch ein wenig verkleinert werden, wenn der Nachläufer 16 in Bezug zum Teleskopträger 18 bereits in seine in Fig. 17 und 18 dargestellte vorderste Endstellung verfahren worden ist.

Obwohl beim Anheben und Absenken des vorderen Endes des Teleskopträgers 18 auch der Neigungswinkel von dessen Längsachse 56 verändert wird, hat dies in keiner Ausrichtung des Nachläufers 16 Auswirkungen auf denselben, da das hinterste Element 90 des Teleskopträgers 18 auf der Auflagerplatte 74 aufliegt und diese in Bezug zum Drehkranz 50 um die Achse 76 schwenkbar ist.

Wenn die Zugmaschine 14 anderweitig benötigt wird, kann das vordere Ende des Teleskopträgers 18 mittels der Vorrichtung 92 auf eine auf dem Boden 34 liegende Unterlage abgesenkt und dann der Schwanenhals 22 zusammen mit dem Teleskopträger 18 im Bereich der Kupplungseinrichtung 32 von der Zugmaschine 14 abgekuppelt werden.

Darüber hinaus ist der Schwanenhals 22 jedoch auch durch eine lösbare Kupplung 114 mit dem Rest des Teleskopträgers 18 verbunden, so dass dieser bei Bedarf gegen einen kürzeren oder längeren Teleskopträger 18 ausgetauscht werden kann.

## Patentansprüche

1. Schwerlast-Transportfahrzeug (10) zum Transport eines länglichen Objekts, mit einer Zugmaschine (14), einem mehrachsigen Nachläufer (16), sowie einem auf dem Nachläufer (16) und auf der Zugmaschine (14) abgestützten Träger (18) für das längliche Objekt, wobei der Nachläufer (16) und der Träger (18) in Bezug zueinander um eine Hochachse (52) des Transportfahrzeugs (10) drehbar sind, wobei der Nachläufer (16) mindestens eine Starrachse (42, 44) und mindestens eine Lenkachse (40) aufweist, und wobei sich in einer ersten Lenkbetriebsart während der Fahrt die Lenkachse (40) des Nachläufers (16) in Abhängigkeit von Drehbewegungen des Trägers (18) um die Hochachse (52) in Bezug zum Nachläufer (16) mittels eines Hydraulik-Kreislaufs, der mindestens zwei Hydraulikzylinder umfasst, wobei mindestens einer der Hydraulikzylinder direkt oder indirekt auf die Lenkachse (40) einwirkt und mindestens ein anderer Hydraulikzylinder (64) Drehbewegungen des Trägers (18) in Bezug zum Nachläufer (16) abnimmt, und wobei Hydraulikfluid durch den Hydraulik-Kreislauf zwischen den Hydraulikzylindern ausgetauscht wird, lenken lässt, wobei der Träger über einen Schwanenhals (22) auf der Zugmaschine (14) abgestützt ist, **gekennzeichnet durch** eine zweite Lenkbetriebsart, in der sich während der Fahrt die Lenkachse (40) des Nachläufers (16) aktiv und unhabhängig von Bewegungen der Zugmaschine (14) und des Trägers (18) lenken lässt, und **gekennzeichnet durch** Einrichtungen zur aktiven Steuerung der Lenkachse (40) des Nachläufers (16) und/oder zur Drehung des Nachläufers (16) um die Hochachse (54) in Bezug zum Träger (18) **durch** Veränderung der Menge an Hydraulikfluid in einem Hydraulik-Kreislauf.

2. Schwerlast-Transportfahrzeug nach Anspruch 1, **gekennzeichnet durch** einen drehfest mit dem Träger (18) verbundenen und in Bezug zum Nachläufer (16) um die Hochachse (52) drehbaren Drehkranz.

3. Schwerlast-Transportfahrzeug nach einem der vorangehenden Ansprüche, **dadurch gekennzeichnet, dass** der Träger (18) in Richtung seiner Längsachse (56) in Bezug zum Nachläufer (16) verschiebbar ist.

4. Schwerlast-Transportfahrzeug nach Anspruch 3, **dadurch gekennzeichnet, dass** zwischen dem Träger (18) und dem Nachläufer (16) Brems- oder Feststelleinrichtungen (B2) angeordnet sind und dass der Träger (18) nach dem Lösen der Brems- oder Feststell-Einrichtungen (82) mittels der Zugmaschine (14) in Richtung seiner Längsachse (56) in Bezug zum Nachläufer (16) verschiebbar ist.

5. Schwerlast-Transportfahrzeug nach Anspruch 3 öder 4, **dadurch gekennzeichnet, dass** der Träger (18) mindestens zwei benachbarte teleskopierbare Elemente (84, 86, 88, 90) umfasst, von denen sich das jeweils vordere Element mindestens teilweise ins hohle Innere des jeweils hinteren Elements einfahren lässt, und von denen das hinterste Element (90) an seiner Außenseite mit einer Linearführung (80) für den Nachläufer (16) versehen ist.

6. Schwerlast-Transportfahrzeug nach einem der vorangehenden Ansprüche, **dadurch gekennzeichnet, dass** der Schwanenhals (22) eine Vorrichtung (92) zum Anheben und Absenken des vorderen Endes des Trägers (18) umfasst.

7. Schwerlast-Transportfahrzeug nach Anspruch 6, **dadurch gekennzeichnet, dass** durch das Anheben des Trägers (18) der Abstand zwischen der Zugmaschine (14) und dem Nachläufer (16) verkürzt wird.

8. Schwerlast-Transportfahrzeug nach Anspruch 6 oder 7, **dadurch gekennzeichnet, dass** die Vorrichtung zum Anheben und Absenken des vorderen Endes des Trägers (18) mindestens eine Parallelogramm-Kinematik (98) und einen Parallellenker (110, 112) umfasst.

9. Schwerlast-Transportfahrzeug nach einem der Ansprüche 6 bis 8, **dadurch gekennzeichnet, dass** die Vorrichtung zum Anheben und Absenken des vorderen Endes des Trägers (18) zwischen einem allgemein horizontal ausgerichteten Halsteil (94) des Schwanenhalses (22) und einem auf der Zugmaschine (14) aufliegenden, in Bezug zur Zugmaschine (14) drehbaren Äuflageteil (96) des Schwanenhalses (22) angeordnet ist.

10. Schwerlast-Transportfahrzeug nach einem der vorangehenden Ansprüche, **dadurch gekennzeichnet**, der Träger (18) in Bezug zum Nachläufer (16) um eine zu einer Längsachse (56) des Trägers (18) senkrechte und zum Untergrund parallele Schwenkachse (76) schwenkbar ist.

## Claims

1. A heavy-load transport vehicle (10) for transporting an elongated object, having a tractor (14), a multi-axle trailer (16) and a carrier (18) for the elongated object supported on the trailer and on the tractor (14), wherein the trailer (16) and the carrier (18) are rotatable in relation to each other about a vertical axis (52) of the transport vehicle (10), the trailer (16) having at least one rigid axle (42, 44) and at least one steering axle (40), and in a first steering operation mode during transport the steering axle (40) of the trailer (16) is steerable in relation to the trailer (16) about the vertical axis (52) as a function of the rotational movements of the carrier (18) by means of a hydraulic circuit comprising at least two hydraulic cylinders, wherein at least one of the hydraulic cylinders directly or indirectly acts on the steering axle (40) and at least one other hydraulic cylinder (64) picks up rotational movements of the carrier (18) in relation to the trailer (16), and wherein hydraulic fluid is exchanged between the hydraulic cylinders by the hydraulic circuit, the carrier being supported on the tractor (14) via a goose neck (22). **characterized by** a second steering operation mode, according to which, during the transport, the steering axle (40) of the trailer (16) is steerable actively and independently from the movements of the tractor (14) and the trailer (18), and **characterized by** a device for active steering of the steering axle (40) of the trailer (16) and/or for rotation of the trailer (16) about the vertical axis (54) in relation to the carrier (18) by changing the amount of hydraulic fluid in a hydraulic circuit.

2. The heavy-load transport vehicle according to claim 1, **characterized by** a rotating assembly connected torque proofed with the carrier (18) and being rotatable in relation to the trailer (16) about the vertical axis (52).

3. The heavy-load transport vehicle according to one of the previous claims, **characterized in that** the carrier (18) is displaceable in direction of its longitudinal axis (56) in relation to the trailer (16).

4. The heavy-load transport vehicle according to claim 3, **characterized by** braking or locking devices (82) arranged between the carrier (18) and the trailer (16), and that, after release of the braking or locking devices (82), the carrier (18) is displaceable in direction of its longitudinal axis (56) in relation to the trailer (16) by means of the tractor (14).

5. The heavy-load transport vehicle according to claim 3 or 4, **characterized in that** the carrier (18) comprises at least two adjacent telescopic elements (84, 86, 88, 90), that each respective front element is at least partially insertable into the hollow inside of the respective rear element, and that the outside of the rearmost element (90) is provided with a linear guidance (80) for the trailer (16).

6. The heavy-load transport vehicle according to one of the previous claims, **characterized in that** the goose-neck (22) comprises a device (92) for lifting and lowering the front end of the carrier (18).

7. The heavy-load transport vehicle according to claim 6, **characterized in that** the distance between the tractor (14) and the trailer (16) is shortened by the lifting of the carrier (18).

8. The heavy-load transport vehicle according to claim 6 or 7, **characterized in that** the device for lifting and lowering of the front end of the carrier (18) comprises at least one parallelogram kinematics (98) and a parallel steering (110, 112).

9. The heavy-load transport vehicle according to one of the claims 6 to 8, **characterized in that** the device for lifting and lowering of the front end of the carrier (18) is arranged between a generally horizontally oriented neck part (94) of the goose-neck (22) and a support part (96) of the goose-neck (22) which is borne on the tractor (14) and is rotatable in relation to the tractor (14).

10. The heavy-load transport vehicle according to one of the previous claims, **characterized in that** the carrier (18) is pivotable in relation to the trailer (16) about a pivot axis (76) which is vertical to a longitudinal axis (56) of the carrier (18) and parallel to the ground.

## Revendications

1. Véhicule de transport de charges lourdes (10) servant au transport d'un objet allongé, comprenant un engin tracteur (14), une remorque suiveuse (16) à plusieurs essieux, ainsi qu'un support (18), prenant appui sur la remorque suiveuse (16) et sur l'engin tracteur (14), destiné à l'objet allongé, sachant que la remorque suiveuse (16) et le support (18) peuvent être tournés l'un par rapport à l'autre autour d'un axe vertical (52) du véhicule de transport (10), sachant que la remorque suiveuse (16) présente au moins un essieu immobile (42, 44) et au moins un essieu de direction (40), et sachant que dans un premier mode de direction, l'essieu de direction (40) de la remorque suiveuse (16) peut être dirigé au cours du trajet en fonction des mouvements de rotation du support (18) autour de l'axe vertical (52) par rapport à la remorque suiveuse (16), au moyen d'un circuit hydraulique, qui comprend au moins deux vérins hydrauliques, sachant qu'au moins un des vérins hydrauliques agit directement ou indirectement sur l'essieu de direction (40) et qu'au moins un autre vérin hydraulique (64) réduit des mouvements de rotation du support (18) par rapport à la remorque suiveuse (16), et sachant que le fluide hydraulique est échangé à travers le circuit hydraulique entre les vérins hydrauliques, sachant que le support prend appui sur l'engin tracteur (14) par l'intermédiaire d'un col de cygne (22), **caractérisé par** un deuxième mode de direction, dans lequel l'essieu de direction (40) de la remorque suiveuse (16) peut être dirigé au cours du trajet de manière active et indépendamment des mouvements de l'engin tracteur (14) et du support (18), et **caractérisé par** des systèmes servant à la commande active de l'essieu de direction (40) de la remorque suiveuse (16) et/ou servant à la rotation de la remorque suiveuse (16) autour de l'axe vertical (54) par rapport au support (18) par la modification de la quantité de fluide hydraulique dans un circuit hydraulique.

2. Véhicule de transport de charges lourdes selon la revendication 1, **caractérisé par** une couronne de rotation reliée de manière solidaire en rotation au support (18) et pouvant tourner autour de l'axe vertical (52) par rapport à la remorque suiveuse (16).

3. Véhicule de transport de charges lourdes selon l'une quelconque des revendications précédentes, **caractérisé en ce que** le support (18) peut être déplacé par coulissement en direction de son axe longitudinal (56) par rapport à la remorque suiveuse (16).

4. Véhicule de transport de charges lourdes selon la revendication 3, **caractérisé en ce que** des systèmes de freinage ou d'immobilisation (82) sont disposés entre le support (18) et la remorque suiveuse (16), et **en ce que** le support (18) peut être déplacé par coulissement, après le desserrage des systèmes de freinage ou d'immobilisation (82), au moyen de l'engin tracteur (14), dans la direction de son axe longitudinal (56) par rapport à la remorque suiveuse (16).

5. Véhicule de transport de charges lourdes selon la revendication 3 ou 4, **caractérisé en ce que** le support (18) comprend au moins deux éléments (84, 86, 88, 90) télescopiques adjacents, parmi lesquels l'élément avant respectivement peut être rentré au moins en partie dans l'intérieur creux de l'élément arrière respectivement, et parmi lesquels l'élément le plus en carrière (90) est pourvu, au niveau de son côté extérieur, d'un système de guidage linéaire (80) destiné à la remorque suiveuse (16).

6. Véhicule de transport de charges lourdes selon l'une quelconque des revendications précédentes, **caractérisé en ce que** le col de cygne (22) comprend un dispositif (92) servant à relever et à abaisser l'extrémité avant du support (18).

7. Véhicule de transport de charges lourdes selon la revendication 6, **caractérisé en ce que** la distance entre l'engin tracteur (14) et la remorque suiveuse (16) est raccourcie par l'action servant à abaisser le support (18).

8. Véhicule de transport de charges lourdes selon la revendication 6 ou 7, **caractérisé en ce que** le dispositif servant à relever et à abaisser l'extrémité avant du support (18) comprend au moins un moyen cinématique en parallélogramme (98) et une barre directrice parallèle (110, 112).

9. Véhicule de transport de charges lourdes selon l'une quelconque des revendications 6 à 8, **caractérisé en ce que** le dispositif servant à relever et à abaisser l'extrémité avant du support (18) est disposé entre une partie de col (94), orientée généralement de manière horizontale, du col de cygne (22) et une partie d'appui (96), reposant sur l'engin tracteur (14), pouvant tourner par rapport à l'engin tracteur (14), du col de cygne (22).

10. Véhicule de transport de charges lourdes selon l'une quelconque des revendications précédentes, **caractérisé en ce que** le support (18) peut pivoter par rapport à la remorque suiveuse (16) autour d'un axe de pivotement (76) perpendiculaire par rapport à un axe longitudinal (56) du support (18) et parallèle par rapport au sol.
